# EUROPEAN PATENT APPLICATION

(11) **EP 2 554 266 A1**
(43) Date of publication of application: **06.02.2013**
(21) Application number: 12178177.7
(22) Date of filing: 27.07.2012
(51) Int. Cl.: B01J 35/04, B01J 23/42, B01J 23/63, B01J 29/42, B01J 35/00, F01N 3/035, B01D 53/94, F01N 3/022, F01N 3/20, F01N 3/10

(54) **Exhaust gas purification device**

(30) Priority: 31.07.2011 JP 2011167891
(71) Applicant: Kabushiki Kaisha Toyota Jidoshokki, Kariya-shi, Aichi 448-8671 (JP)
(72) Inventor: Murasaki, Takanori, Kariya-shi Aichi 448-8671 (JP)
(74) Representative: TBK

(57) **Abstract**

An exhaust gas purification device includes a purification member and a carrier. The purification member includes a plurality of fluid passages and a plurality of partition walls. A plurality of the fluid passages extends parallel to each other. Exhaust gas from an internal combustion engine is discharged into the fluid passages. A plurality of partition walls defines the fluid passages and separates the two adjacent fluid passages. The carrier includes a plurality of carrier bars and a carrier support. Each carrier bar supports catalyst on the surface of the carrier bar and inserted in the fluid passage without being in contact with the partition walls. The carrier support is connected to the carrier bars and engaged with the upstream end of the purification member or the downstream end of the purification member.

## Description

### BACKGROUND OF THE INVENTION

The present invention relates to an exhaust gas purification device.

Japanese Patent Application Publication No. 2005-220848 discloses a particulate filter for exhaust gas having therein a plurality of main partition walls that define gas inlet-side cells and gas outlet-side cells. Sub partition walls are disposed in the respective gas inlet-side cells. Each sub partition wall is formed integrally with a cap member mounted at an end of the gas outlet-side cell. The sub partition walls are inserted in the respective gas inlet-side cells in such a way that each sub partition wall is prevented from being moved in the gas inlet-side cell to be brought into contact with a part of the main partition wall. The surfaces of the main and the sub partition walls are coated with layers of oxidation catalyst or NOx adsorbing material. The oxidation catalyst or NOx adsorbing material reacts with substances contained in exhaust gas thereby to produce active oxygen. Particulate matters (PM) collected in the surfaces of the main and sub partition walls are combusted or oxidized by the produced active oxygen.

In the particulate filter according to the above-mentioned Publication, since each sub partition wall is provided in the gas inlet-side cell, PM in exhaust gas is captured by the surfaces of the sub partition walls before being collected in the surfaces of the main partition walls and, therefore, there is a fear that the oxygen catalyst or NOx adsorbing material fails to become sufficiently active on the surface of the sub partition wall. In a case that the particulate filter is small in size and the main partition and the sub partition walls are coated with different catalysts, a small spaced interval between the main partition and the sub partition walls may cause a fear that the catalysts fails to be activated due to the use of different catalysts provided in close proximity to each other. Failure of the different catalysts to be activated due to the location thereof in close proximity to each other means that one catalyst prevents the activation of the other catalyst, so that the catalytic function of each catalyst is performed insufficiently.

The present invention which has been made in light of the above problems is directed to providing an exhaust gas purification device that can perform the function of exhaust gas purification by integrated members made of different materials.

### BRIEF DESCRIPTION OF THE DRAWINGS

Fig. 1 is a schematic configuration diagram showing an exhaust gas purification system including an exhaust gas purification device according to a first preferred embodiment of the present invention;
Fig. 2 is an exploded perspective view showing an SCR/DPF catalyst serving as the exhaust gas purification device of Fig. 1;
Fig. 3 is a cutaway view that is taken along the line A-A in Fig. 2;
Fig. 4 is a rear view showing the SCR/DPF catalyst of Fig. 2;
Fig. 5A is a fragmentary cross-sectional view showing the SCR/DPF catalyst of Fig. 2;
Fig. 5B is a partially enlarged cross-sectional view showing the encircled portion P of Fig. 5A, and
Fig. 6 is a fragmentary cross-sectional view showing an SCR/DPF catalyst of an exhaust gas purification device according to an another embodiment of the present invention.

### DETAILED DESCRIPTION OF THE PREFERRED EMBODIMENT

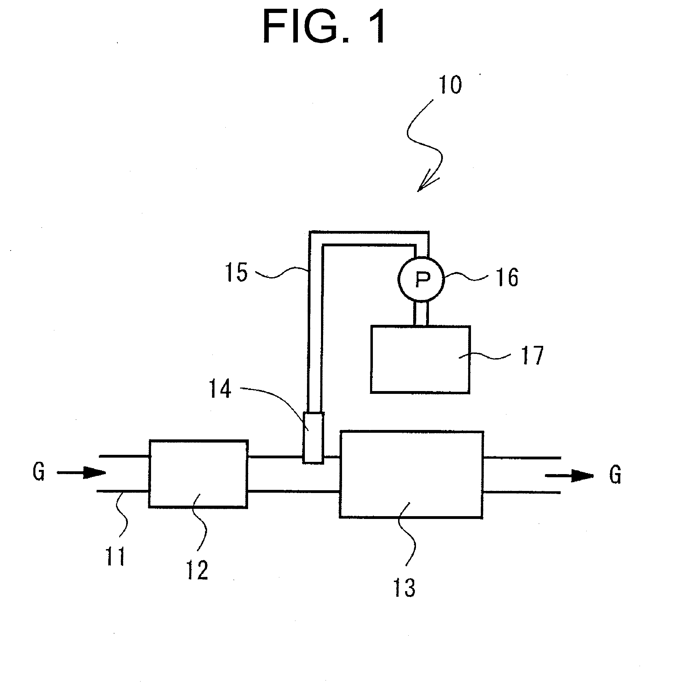

The following will describe an exhaust gas purification system which is used for an internal combustion engine such as a diesel engine and includes an exhaust gas purification device of a first preferred embodiment of the present invention, with reference to Figs. 1 through 5. Referring firstly to Fig. 1, the reference numeral 10 designates the exhaust gas purification system including an exhaust gas passage 11, into which exhaust gas from an internal combustion engine (not shown) is discharged. A diesel oxidation catalyst (DOC) 12 is disposed in the exhaust gas passage 11, which has the property of oxidizing hydrocarbons (HC) and nitrogen monoxide (NO) contained in the exhaust gas. The DOC 12 is made of noble metal catalyst such as platinum (Pt).

A diesel particulate filter (DPF) used for collecting particulate matters (PM) contained in the exhaust gas and a selective catalytic reduction (SCR) catalyst used for selectively reducing nitrogen oxides (NOx) are formed integrally into an SCR/DPF catalyst 13. The SCR/DPF catalyst 13 is provided downstream of the DOC 12. The SCR/DPF catalyst 13 serves as an exhaust gas purification device of the present invention. A urea solution supply valve 14 is provided in the exhaust gas passage 11 between the DOC 12 and the SCR/DPF catalyst 13, and a tube 15 is provided for connecting the urea solution supply valve 14 to a urea solution tank 17. A pump 16 is provided in the tube 15. The urea solution supply valve 14, the tube 15, the pump 16 and the urea solution tank 17 serve as a urea solution supply mechanism of the exhaust gas purification system 10. Urea solution stored in the urea solution tank 17 is pumped and transferred by the pump 16 and injected through the urea solution supply valve 14 into exhaust gas flowing in the exhaust gas passage 11. Ammonia (NH₃) produced by hydrolyzing the urea solution injected into the exhaust gas passage 11 is mixed with the exhaust gas in the exhaust gas passage 11 and introduced into the SCR/DPF catalyst 13.

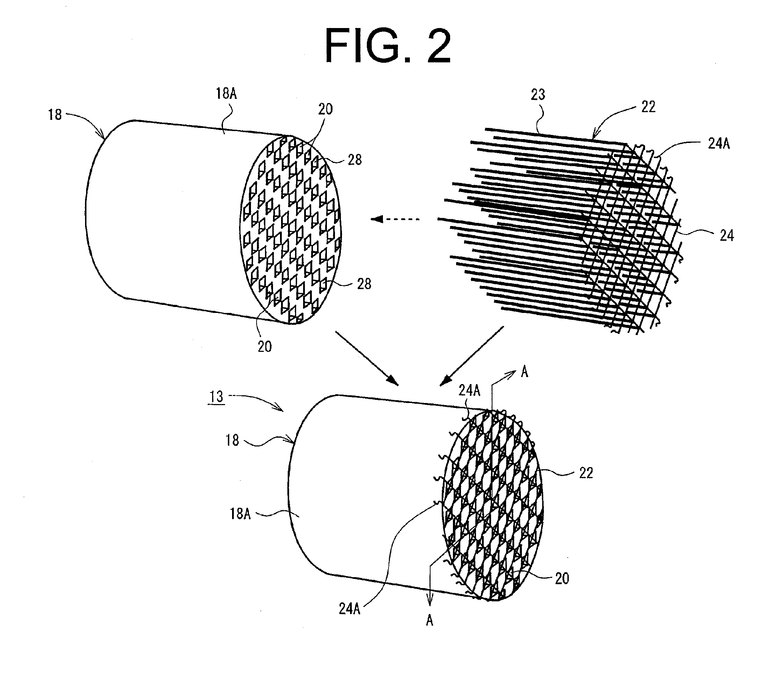

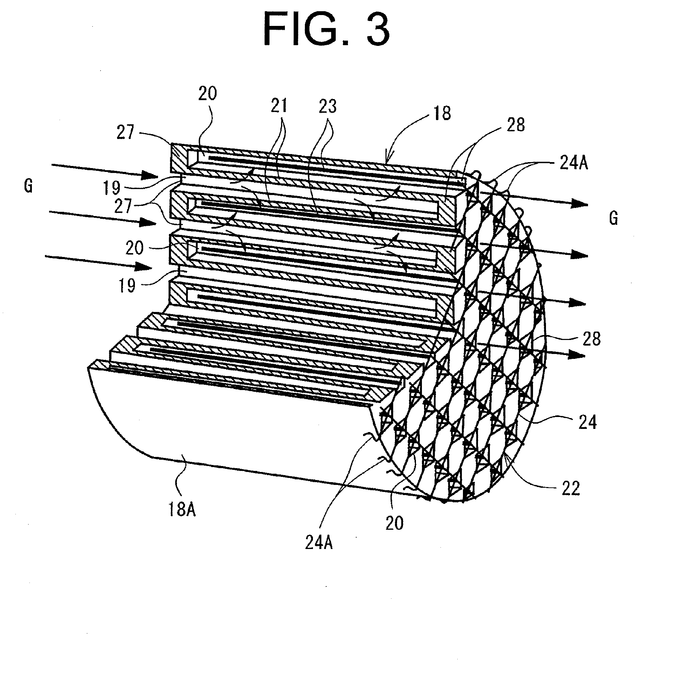

Referring to Figs. 2 and 3, the SCR/DPF catalyst 13 includes a filter base 18 and a carrier 22. The filter base 18 has a honeycomb structure of a cylindrical shape. The filter base 18 has formed therein a number of parallel fluid passages arranged in a lattice pattern as seen in its cross-section. The filter base 18 includes a plurality of partition walls 21 defining the fluid passages. Each fluid passage has an upstream end 27 and a downstream end 28 with respect to the flowing direction of exhaust gas in the SCR/DPF catalyst 13. The filter base 18 serves as a purification member of the present invention.

The fluid passages of the filter base 18 include a plurality of inlet-side passages 19 and a plurality of outlet-side passages 20. Each inlet-side passage 19 is closed at the downstream end 28 and opened at the upstream end 27, while each outlet-side passage 20 is closed at the upstream end 27 and opened at the downstream end 28. That is, the filter base 18 has a wall flow honeycomb structure. Exhaust gas is introduced into the inlet-side passage 19 through its opening at the upstream end 27 and discharged out of the outlet-side passage 20 through its opening at the downstream end 28. The inlet-side passages 19 and the outlet-side passages 20 are disposed alternately in lattice arrangement of the fluid passages in the filter base 18, or provided alternately adjacent to one another in vertical and horizontal directions as shown in Fig. 3. Any two adjacent inlet-side passage 19 and outlet-side passage 20 are separated by the partition walls 21.

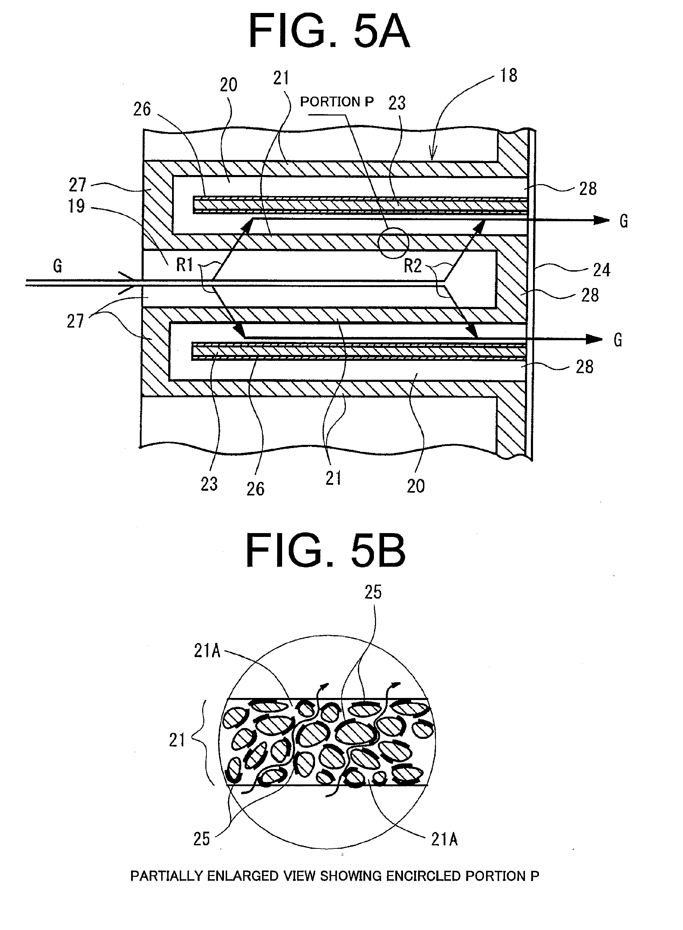

The filter base 18 is made of a porous material having a number of pores, such as ceramic or zeolite. The partition walls 21 are coated with an SCR catalyst such as copper zeolite (Cu-ZSM5). Referring to Figs. 5A and 5B, the SCR catalyst 25 is supported not only by the surfaces of the partition walls 21 but also by the surfaces forming the pores 21A of the partition walls 21.

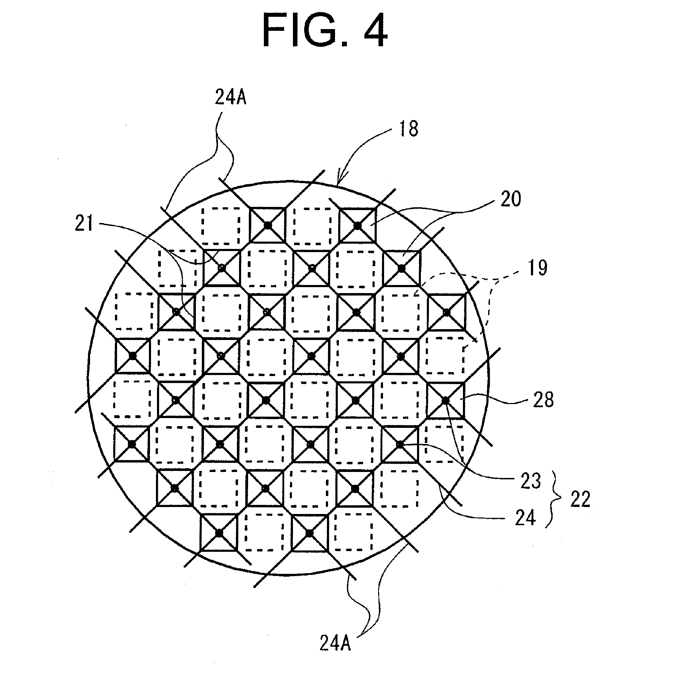

As shown in Fig. 2, a carrier 22 includes a plurality of carrier bars 23 and a carrier support 24 which is used for supporting the carrier bars 23 together in a cantilever manner. Each carrier bar 23 is made of a long round bar with a small diameter and a length that is slightly smaller than the length of the outlet-side passage 20. The carrier bars 23 are inserted in the filter base 18 from the downstream side thereof and provided in the filter base 18 in parallel relation to the partition walls 21 without being in contact therewith. Referring to Fig. 4, the carrier bars 23 are previously fixed to the carrier support 24 at an interval corresponding to the distance between centers of any two adjacent outlet-side passages 20, and the carrier bars 23 are arranged in the respective outlet-side passages 20 each having a rectangular cross-section so that each carrier bar 23 is positioned at the center of the outlet-side passage 20. The carrier bar 23 is made of a round stainless steel or ceramic bar with a small diameter. Referring to Fig. 5A, the surface of the carrier bar 23 is coated with the oxidation catalyst 26 made of a material such as platinum supported on alumina (Pt/Al2O3), and the carrier bar 23 is coated with an increasing amount of oxidation catalyst 26 toward the downstream end of the outlet-side passage 20.

The carrier support 24 is made of a metal wire mesh. The carrier bar 23 is fixed at one end thereof to the carrier support 24 and extends therefrom in perpendicular relation to the carrier support 24. The carrier support 24 has a plurality of extensions 24A. The extensions 24A are bent for engagement with the outer periphery 18A of the filter base 18, as shown in Fig. 3. Each extension 24A presses the outer periphery 18A of the filter base 18 by elastic force of the metal wires, so that the filter base 18 supports the carrier 22. Part of the outer periphery 18A that is adjacent to the downstream end of the filter base 18 corresponds to the downstream portion of the purification member of the present invention.

In mounting the carrier 22 in the filter base 18, the carrier 22 is positioned in facing relation to the downstream end 28 of the outlet-side passage 20, as shown in Fig. 2, and then inserted into the outlet-side passage 20 from the downstream end 28 of the outlet-side passage 20, as indicated by dotted arrow in Fig. 2, until the carrier support 24 of the carrier 22 is brought into contact with the downstream end of the filter base 18, as shown in the lower drawing of Fig. 2. The extensions 24A of the carrier support 24 are fixedly engaged with the outer periphery 18A of the filter base 18. The carrier 22 is connected to the filter base 18, but each carrier bar 23 is disposed in the filter base 18 without being in contact with the partition wall 21 of the filter base 18.

The following will describe the operation of the exhaust gas purification system 10 as constructed above. Exhaust gas flows through the DOC 12 that is disposed on the upstream side of the exhaust gas passage 11 and urea solution is injected from the urea solution supply valve 14 into the exhaust gas flowing in the exhaust gas passage 11 between the DOC 12 and the SCR/DPF catalyst 13. The injected urea solution is combined with moisture in the exhaust gas thereby to produce ammonia, and the exhaust gas mixed with the ammonia is introduced into the inlet-side passages 19 of the filter base 18 in the SCR/DPF catalyst 13.

As shown in Fig. 5A, the exhaust gas mixed with ammonia and introduced into the inlet-side passage 19 flows through the partition wall 21 and into its adjacent outlet-side passage 20. The flowing path of exhaust gas introduced into the inlet-side passage 19 through the upstream end 27 and flowing through the partition walls 21 into the adjacent outlet-side passages 20 while flowing toward the downstream end 28 is indicated by arrows in Fig. 5A. When the exhaust gas flows through the pores 21A, PM contained in the exhaust gas is collected in the partition wall 21 which is made of a porous material and ammonia in the exhaust gas is adsorbed in the SCR catalyst 25 on the surface of the partition wall 21 and the SCR catalyst 25 on the surface forming the pores 21A of the partition wall 21, as shown in Fig. 5B. Thus, NOx in the exhaust gas is selectively reduced by the ammonia adsorbed in the SCR catalyst 25. As shown in Fig. 5B, the exhaust gas flows through the pores 21A of the partition wall 21 in a serpentine manner as indicated by arrows in the drawing.

The exhaust gas flowing through the partition wall 21 into the outlet-side passage 20 is made to be in contact with the carrier bars 23 of the carrier 22 provided in the outlet-side passage 20. Substances remaining in the exhaust gas, such as ammonia, HC and NO, are oxidized by the oxidation catalyst 26 coated on the carrier bars 23. The exhaust gas flowing through the partition wall 21 into the outlet-side passage 20 contains little PM, so that the attachment of PM to the carrier bars 23 is prevented.

Referring to Fig. 5A, arrows R1 indicate paths along which exhaust gas flows from a position near the upstream end 27 of the inlet-side passage 19 through the partition walls 21 into the outlet-side passages 20, while arrows R2 indicate paths along which exhaust gas flows from a position that is far from the upstream end 27 through the partition walls 21 into the outlet-side passage 20. Exhaust gas flowing along the paths R1 is made to be in contact with the carrier bars 23 in the outlet-side passages 20 for a long distance before being discharged out through the downstream end 28 of the outlet-side passage 20. Exhaust gas flowing along the paths R2 is made to be in contact with the carrier bars 23 in the outlet-side passages 20 for a short distance before being discharged out through the downstream end 28 of the outlet-side passage 20. As stated earlier, the carrier bar 23 is coated with an increasing amount of oxidation catalyst 26 toward the downstream end of the outlet-side passage 20. Therefore, ammonia in the exhaust gas flowing along the flowing path R2 may be oxidized appropriately by an increased amount of the oxidation catalyst 26 coated on the carrier bars 23. As indicated by arrows G in Fig. 5A, the exhaust gas which is made to be in contact with the carrier bars 23 in the outlet-side passage 20 and purified flows out through the downstream end 28 of the outlet-side passage 20.

The carrier bars 23 coated with the oxidation catalyst 26 are disposed in the outlet-side passage 20 and spaced from the partition walls 21 coated with the SCR catalyst 25. If the SCR catalyst 25 on the partition wall 21 and the oxidation catalyst 26 on the carrier bar 23 are located in proximity to each other, one of the SCR catalyst 25 and the oxidation catalyst 26 prevents the activation of the other of the catalysts 25, 26 due to the catalytic interaction, with the result that the catalytic function of the catalysts 25, 26 is not performed sufficiently. According to the present invention, poor activation of the catalysts 25, 26 resulting from location thereof in close proximity to each other may be prevented, and the exhaust gas purification function of the filter base 18 and the carrier 22 may be performed sufficiently.

Disposition of the carrier bar 23 in the outlet-side passage 20 along its length and in parallel relation to the flowing direction of exhaust gas in the outlet-side passage 20 restricts the pressure loss of exhaust gas in the outlet-side passage 20 while allowing smooth flow of exhaust gas in the outlet-side passage 20. Since the carrier support 24 that supports the carrier bars 23 and covers the downstream end 28 of the outlet-side passage 20 has a wire-mesh structure, the pressure loss of exhaust gas flowing through the downstream end 28 may be restricted to minimum.

Thus, disposing the SCR/DPF catalyst 13 as the catalyst unit in the exhaust gas purification system 10, the DPF function of collecting PM in exhaust gas, the SCR function selectively reducing NOx in exhaust gas and the DOC function oxidizing ammonia in exhaust gas can be integrated in the SCR/DPF catalyst 13, with the result that the exhaust gas purification system 10 may be downsized.

The exhaust gas purification device according to the preferred embodiment of the present invention offers the following advantageous effects.
(1) The SCR/DPF catalyst 13 is a single catalyst unit which can perform the DPF function of collecting PM in exhaust gas, the SCR function of selectively reducing NOx in exhaust gas and the DOC function of oxidizing ammonia in exhaust gas, thereby making it possible downsize the exhaust gas purification system 10.
(2) The partition walls 21 of the filter base 18 coated with the SCR catalyst 25 and the carrier bars 23 of the carrier 22 coated with the oxidation catalyst 26 are disposed in spaced relation to each other without being contact with each other. Thus, poor activation of the catalysts 25, 26 resulting from location thereof in close proximity to each other may be prevented and the exhaust gas purification function of the filter base 18 and the carrier 22 may be performed appropriately.
(3) The filter base 18 has a wall flow honeycomb structure in which the inlet-side passages 19 closed at the downstream end 28 and the outlet-side passage 20 closed at the upstream end 27 are arranged alternatively, so that exhaust gas introduced into the inlet-side passage 19 flows through the partition wall 21 made of a porous material into the outlet-side passage 20. When the exhaust gas flows through the partition wall 21, PM in exhaust gas is removed therefrom and collected in the partition wall 21. The carrier bars 23 of the carrier 22 are inserted into the respective outlet-side passages 20 from the downstream side thereof. Thus, no PM is contained in exhaust gas that has flowed through the partition wall 21 and, therefore, no PM is attached to the carrier bars 23 by contact of the exhaust gas with the carrier bars 23.
(4) The carrier bars 23 are disposed in the outlet-side passages 20 along their length in parallel relation to the flowing direction of exhaust gas in the outlet-side passage 20, so that the pressure loss of exhaust gas in the outlet-side passage 20 is prevented while allowing smooth flow of exhaust gas in the outlet-side passage 20. Since the carrier support 24 that supports the carrier bars 23 and covers the downstream end 28 of the outlet-side passage 20 has a wire-mesh structure, the pressure loss of exhaust gas flowing through the downstream end 28 is restricted to minimum.
(5) Assembly of the SCR/DPF catalyst 13 may be accomplished by inserting the carrier bars 23 of the carrier 22 into the outlet-side passage 20 until the carrier support 24 of the carrier 22 is brought into contact with the downstream end of the filter base 18 and then bending the extension 24A of the carrier support 24 for engagement with the outer periphery 18A of the filter base 18. Thus, the SCR/DPF catalyst 13 is easy to be assembled.
(6) The carrier bar 23 is coated with an increasing amount of the oxidation catalyst 26 toward the downstream end of the outlet-side passage 20. Therefore, ammonia in the exhaust gas flowing along the flowing path R2 may be oxidized appropriately by an increased amount of the oxidation catalyst 26 coated on the carrier bars 23.

The present invention is not limited to the above-described embodiment, but it may be modified into various alternative embodiments as exemplified below.

According to the preferred embodiment of the present invention, the filter base 18 having a wall flow honeycomb structure serves as the purification member of the present invention. According to an exhaust gas purification device of a first alternative embodiment, a filter base having a straight flow honeycomb structure may serve as the purification member of the present invention. The filter base of a straight flow honeycomb structure has formed therethrough fluid passages extending parallel to each other and having both ends opened. The partition wall of this filter base is coated with SCR catalyst. Carrier bars of the carrier of the first alternative embodiment are inserted in the respective fluid passages of the filter base from either of the upstream and the downstream sides of the passages and fixedly supported by the carrier support. As in the case of the preferred embodiment, the carrier of the first alternative embodiment are coated with oxidation catalyst. According to the first alternative embodiment, the SCR function and the DOC function are integrated thereby to form the catalyst unit.

The following will describe an exhaust gas purification device according to a second alternative embodiment which is similar in structure to the preferred embodiment. According to the exhaust gas purification device of the second alternative embodiment, the filter base has a wall flow honeycomb structure and the carrier is inserted into the outlet-side passage 20 of the filter base from the downstream side of the outlet-side passage 20 and fixed in the outlet-side passage 20. The partition wall 21 of the filter base is coated with PM oxidation catalyst such as Ag/Ce02 instead of SCR catalyst. The exhaust gas purification system having the exhaust gas purification device of the present invention dispenses with a urea solution supply mechanism. PM collected in the partition wall 21 of the filter base may be removed by oxidizing PM oxidation catalyst. According to the exhaust gas purification device of the second alternative embodiment, the DPF function and the DOC function may be integrated to form a catalyst unit, and the filter base may be regenerated by the PM oxidation catalyst.

The following will describe an exhaust gas purification device according to a third alternative embodiment which is similar in structure to the first alternative embodiment. According to the exhaust gas purification device of the third alternative embodiment, a filter base has a straight flow honeycomb structure and the partition walls of the filter base are coated with HC adsorber made of a material such as zeolite. No urea solution supply mechanism is provided in the exhaust gas purification system having the exhaust gas purification device according to the third alternative embodiment. HC may be temporarily retained in the HC adsorber, and the HC may be released and oxidized in accordance with an increase of temperature of the exhaust gas. According to the exhaust gas purification device of the third alternative embodiment, the DOC function may be reinforced and poisoning by HC may be prevented.

The following will describe an exhaust gas purification device according to a fourth alternative embodiment which is similar in structure to the second alternative embodiment. According to the exhaust gas purification device of the fourth alternative embodiment, the partition walls of the filter base is coated with oxidation catalyst instead of SCR catalyst and the carrier bars of the carrier are coated with NOx storage Reduction (NSR) catalyst. No urea solution supply mechanism is provided in the exhaust gas purification system having the exhaust gas purification device of the fourth alternative embodiment. According to the exhaust gas purification device of the fourth alternative embodiment, the DPF function, the DOC function and the NSR function are integrated thereby to from the catalyst unit.

According to the preferred embodiment, the carrier bar 23 of the carrier 22 is made of a long round bar. Alternatively, the carrier bar 23 may be formed of an ultrathin plate or of any member having a shape that ensures smooth flow of exhaust gas in the fluid passage.

According to the preferred embodiment, the carrier bar 23 is made of a stainless steal or ceramic and the surface of such carrier bar 23 is coated with the oxidation catalyst 26 made of a material such as Pt/Al₂O₃. Alternatively, the carrier bar 23 may be made of aluminum (Al) and the surface of such carrier bar 23 may be provided with anodic oxidation coating on Al or Al₂O₃ layer on Al and Pt is supported by the anodic oxidation coating or the Al₂O₃ layer.

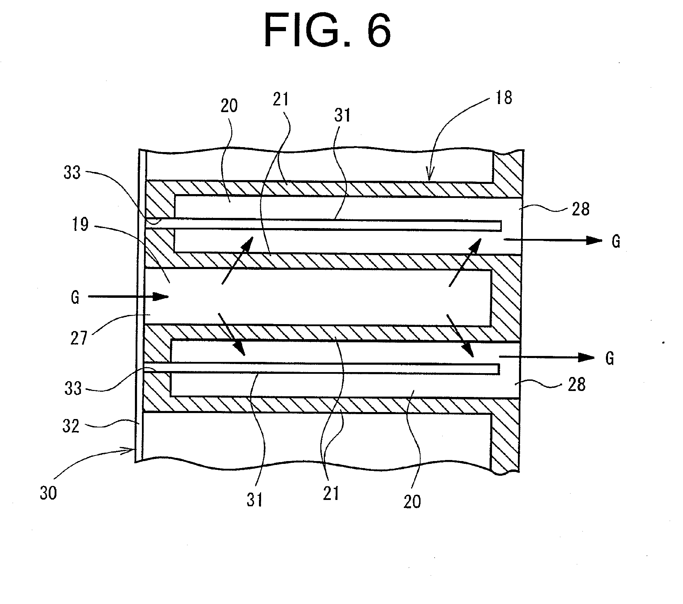

According to the preferred embodiment, the carrier bars 23 of the carrier 22 are inserted into the respective outlet-side passages 20 of the filter base 18 from the downstream side of the outlet-side passage 20 and the carrier support 24 is engaged with the outer periphery 18A of the filter base 18. Alternatively, the exhaust gas purification device may be constructed as shown in Fig. 6. According to the exhaust gas purification device shown in Fig. 6, the closed upstream end 27 of the outlet-side passage 20 has formed therethrough a hole 33 and the carrier bar 31 of the carrier 30 is inserted at one end thereof through the hole 33 and extends in the outlet-side passage 20, as shown in Fig. 6. The carrier support 32 of the carrier 30 is fixedly engaged with the upstream outer periphery of the filter base 18. The diameter of the hole 33 is greater than that of the carrier bar 31, and a seal member is provided between the hole 33 and the carrier bar 31 for sealing therebetween.

An exhaust gas purification device includes a purification member and a carrier. The purification member includes a plurality of fluid passages and a plurality of partition walls. A plurality of the fluid passages extends parallel to each other. Exhaust gas from an internal combustion engine is discharged into the fluid passages. A plurality of partition walls defines the fluid passages and separates the two adjacent fluid passages. The carrier includes a plurality of carrier bars and a carrier support. Each carrier bar supports catalyst on the surface of the carrier bar and inserted in the fluid passage without being in contact with the partition walls. The carrier support is connected to the carrier bars and engaged with the upstream end of the purification member or the downstream end of the purification member.

## Claims

1. An exhaust gas purification device (10) comprising:
a purification member including:
a plurality of fluid passages extending parallel to each other, the fluid passages into which exhaust gas from an internal combustion engine is discharged; and
a plurality of partition walls (21) defining the fluid passages and separating the two adjacent fluid passages, and
a carrier (22, 30) including:
a plurality of carrier bars (23, 31) each supporting catalyst on the surface of the carrier bar (23, 31) and inserted in the fluid passage without being in contact with the partition walls (21); and
a carrier support (24, 32) connected to the carrier bars (23, 31), the carrier support (24, 32) engaged with an upstream portion of the purification member or a downstream portion of the purification member.

2. The exhaust gas purification device (10) according to claim 1, **characterized in that** the partition walls (21) of the purification member and the carrier bars (23, 31) of the carrier (22, 30) are coated with different catalysts.

3. The exhaust gas purification device (10) according to claim 1 or 2, **characterized in that** the purification member is a filter base (18) having a wall flow honeycomb structure in which the filter base (18) includes a plurality of inlet-side passages (19) each closed at a downstream end (28) of the inlet-side passage (19) and opened at an upstream end (27) of the inlet-side passage (19) and a plurality of outlet-side passages (20) each closed at an upstream end (27) of the outlet-side passage (20) and opened at a downstream end (28) of the outlet-side passage (20) are arranged alternatively, and the carrier bars (23) of the carrier (22) are inserted into the outlet-side passages (20) from a side of downstream ends of the outlet-side passages (20).

4. The exhaust gas purification device (10) according to claim 2 or 3, **characterized in that** the carrier bar (23, 31) is coated with an increasing amount of oxidation catalyst toward the downstream end (28) of the outlet-side passage (20).

5. The exhaust gas purification device (10) according to any one of claims 2 through 4, **characterized in that** the partition walls (21) are coated with selective catalytic reduction catalyst (25), the carrier bars (23) are coated with oxidation catalyst (26).

6. The exhaust gas purification device (10) according to claim 5, **characterized in that** the carrier bar (23) is made of a stainless steal or a ceramic, the oxidation catalyst (26) is made of platinum supported on alumina.

7. The exhaust gas purification device (10) according to claim 5, **characterized in that** the carrier bar (23) is made of aluminum and the surface of the carrier bar (23) is provided with anodic oxidation coating on aluminum and platinum is supported by the anodic oxidation coating.

8. The exhaust gas purification device according to claim 2, **characterized in that** the partition walls (21) are coated with oxidation catalyst, the carrier bars (23) are coated with nitrogen oxides storage reduction catalyst.

9. The exhaust gas purification device according to claim 1 or 2, **characterized in that** the purification member is a filter base (18) having a straight flow honeycomb structure, the filter base (18) includes a plurality of the fluid passages extending parallel to each other and having both ends (27, 28) opened, and the carrier bars (23) of the carrier (22) are inserted into all fluid passages from a side of the upstream ends (27) of the fluid passages or the downstream ends (28) of the fluid passages.

10. The exhaust gas purification device according to claim 9, **characterized in that** the partition walls (21) are coated with hydrocarbon adsorber, the carrier bars (23) are coated with oxidation catalyst (26).
